(19) Europäisches Patentamt
European Patent Office
Office européen des brevets

(11) Veröffentlichungsnummer : **0 081 731**
**B1**

(12) # EUROPÄISCHE PATENTSCHRIFT

(45) Veröffentlichungstag der Patentschrift : **02.01.86**

(51) Int. Cl.⁴ : **C 07 F 9/38**

(21) Anmeldenummer : **82110978.2**

(22) Anmeldetag : **27.11.82**

(54) **Verfahren zur Herstellung von Phosphonsäureanhydriden.**

(30) Priorität : **10.12.81 DE 3148881**

(43) Veröffentlichungstag der Anmeldung : **22.06.83 Patentblatt 83/25**

(45) Bekanntmachung des Hinweises auf die Patenterteilung : **02.01.86 Patentblatt 86/01**

(84) Benannte Vertragsstaaten : **BE CH DE FR GB IT LI NL SE**

(56) Entgegenhaltungen :

**Chemical Abstracts Band 90, Nr. 13, 26. März 1979 Columbus, Ohio, USA N.A. ANDREEV et al. "Incomplete hydrolysis of alkyl-, cycloalkyl- and aryldichlorophosphines" Seite 604, Spalte 2, Abstract Nr. 104057y**

**Chemical Abstracts Band 79, Nr. 7, 20. August 1973 Columbus, Ohio, USA M.A. RUVEDA et al. "Organophosphorus chemistry. II. P1, P2-disubstituted pyrophosphoric acid formation from organothiophosphoryl dichlorides or organophosphorus (III) dichlorides and dimethyl sulfoxide Seite 371, Spalte 1, Abstract Nr. 42611m**

**ANGEWANDTE CHEMIE, Band 20, Nr. 3, 1981 Weinheim K. WEISSERMEL et al. "Advances in organophosphorus chemistry based on Dichloro-(methyl)phosphane, Seiten 223-233**

(73) Patentinhaber : **HOECHST AKTIENGESELLSCHAFT**
**Postfach 80 03 20**
**D-6230 Frankfurt am Main 80 (DE)**

(72) Erfinder : **Grosse, Jürgen, Dr.**
**Am Grünen Weg 5**
**D-5030 Hürth (DE)**
Erfinder : **Pieper, Werner, Dr.**
**Am Wachberg 27 a**
**D-5042 Erftstadt (DE)**

**EP 0 081 731 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft ein Verfahren zur Herstellung von Phosphonsäureanhydriden durch Oxidation von Alkyl- oder Aryldichlorphosphanen.

Es ist aus der Literatur bekannt, Phosphonsäureanhydride hauptsächlich nach folgenden drei generellen Verfahrenswegen herzustellen :

1) durch Kondensation von zwei Phosphonsäurederivaten,

2) durch Übertragung von Anhydridfunktionen auf Phosphonsäurederivate mit Hilfe organischer Verbindungen und

3) durch Oxidation und Kondensation von phosphonigen Säuren unter Ausbildung der Anhydridstruktur.

Der erste Verfahrensweg umfaßt Reaktionen, wie sie von K. Sasse in Houben-Weyl, Methoden der organischen Chemie *12/1*, 612-613 (1963), Georg Thieme Verlag Stuttgart beschrieben werden, nämlich

a) die Kondensation äquimolarer Gemische von Phosphonsäuren und ihren Dichloriden gemäß der Gleichung :

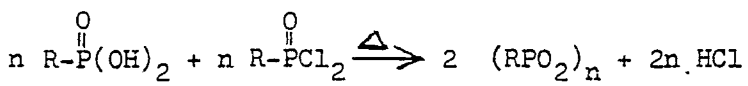

oder

b) die thermische Zersetzung von Phosphonsäureesterchloriden gemäß der Gleichung :

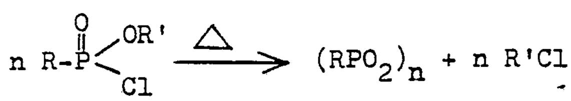

oder

c) die Dismutierung von Pyrophosphonsäureestern gemäß der Gleichung :

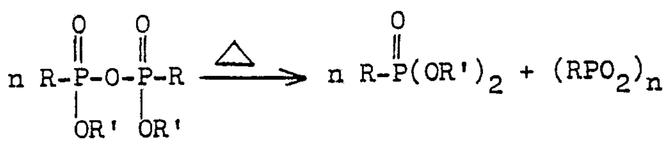

oder

d) die thermische Dehydratisierung von Phosphonsäuren bei Temperaturen von 250-450 °C und vermindertem Druck gemäß der Gleichung :

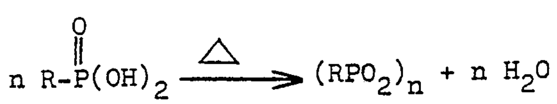

Die Reaktion gemäß Gleichung a) setzt die Synthese zweier Verbindung der Phosphonsäuregruppe voraus, während die Reaktionen gemäß den Gleichungen b) und c) von schwer zugänglichen Zwischenprodukten ausgehen und damit aus technischer Sicht wenig interessant sind, ebenso wie die energetisch ungünstige Reaktion gemäß Gleichung d).

Zur Gruppe 2 der Verfahrenswege zur Herstellung von Phosphonsäureanhydriden gehört die Umsetzung von Phosphonsäuredichloriden mit Carbonsäureanhydriden bei erhöhter Temperatur, wie sie in der DE-PS 2 908 264 beschrieben ist, bzw. die Umsetzung von Phosphonsäurechloriden mit Paraformaldehyd, entsprechend der Veröffentlichung von K. Moedritzer in J. Amer. Chem. Soc. *83*, 4381 (1961). Beide Verfahren lassen sich in den nachfolgenden Reaktionsgleichungen erfassen.

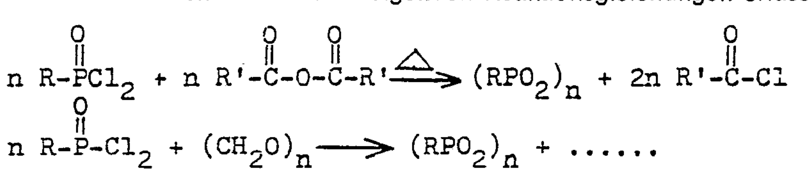

Das erstgennante Verfahren ist mit dem Nachteil behaftet, daß es lange Reaktionszeiten erfordert, während das zweite Verfahren dunkelgefärbte Verfahrensprodukte in schlechter Ausbeute ergibt.

Schließlich lassen sich in die Gruppe 3 solche Verfahren zur Herstellung von Phosphonsäureanhydriden einordnen, die auf der Oxidation von phosphonigen Säuren basieren, wobei als Oxidationsmittel Schwefel oder Sulfurylchlorid verwendet werden. Die Verfahren sind von E. E. Nifant'ev und Mitarbeitern in J. Gen. Chem. USSR *50*, 2159 (1980) bzw. J. Gen. Chem. USSR *49*, 1678 (1979) publiziert. Für die Oxidation von phosphonigen Säuren ist Schwefel ein wenig geeignetes Oxidationsmittel, da die Umsetzung erst bei erhöhter Temperatur mit geschmolzenem Schwefel abläuft.

Die im vorhergehenden aufgezeigten Nachteile der bekannten Verfahren werden durch die vorliegende Erfindung überwunden.

Gegenstand der Erfindung ist ein Verfahren zur Herstellung von Phosphonsäureanhydriden der allgemeinen Formel (I)

$$(RPO_2)_n \cdot H_2O \qquad (I)$$

in welcher R einen Alkyl- oder Arylrest mit 1-6 C-Atomen bedeutet und n ein Wert zwischen 2 und 20 ist, welches dadurch gekennzeichnet ist, daß man eine Verbindung der allgemeinen Formel (II)

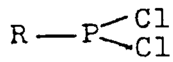 (II)

wobei R obige Bedeutung besitzt, mit konzentrierter Schwefelsäure in einer Inertgasatmosphäre und in Gegenwart eines Verdünnungsmittels bei einer Temperatur zwischen Null und 100 °C unter Entweichen von Chlorwasserstoff und Schwefeldioxid oxidiert, wobei das Molverhältnis zwischen der Verbindung der allgemeinen Formel (II) und der Schwefelsäure etwa 1 zu 1 beträgt, und daß man nach beendeter Reaktion das Verdünnungsmittel von dem entstandenen Verfahrensprodukt entsprechend der allgemeinen Formel (I) abtrennt.

Nach einer bevorzugten Ausführungsform des erfindungsgemäßen Verfahrens beträgt das Molverhältnis zwischen der Verbindung der allgemeinen Formel (II) und der Schwefelsäure 1 bis 1,2 zu 1.

Als Verdünnungsmittel haben sich Ether bewährt, da sie die Fähigkeit besitzen, mit Mineralsäuren Addukte zu bilden. Beispielsweise sind als Verdünnungsmittel Ether mit einem Siedepunkt von etwa 30 bis 140 °C, wie Diethylether, Diisopropylether, Dibutylether oder Dioxan geeignet.

Durch Einbringen geringer Mengen Wasser in den Reaktionsansatz, z. B. in Form von Schwefelsäure mit einem $H_2SO_4$-Gehalt kleiner 100 % oder in Form nicht wasserfreier Verdünnungsmittel kann die mittlere Kettenlänge n des Phosphonsäureanhydrids gesteuert werden.

Da die erfindungsgemäße Reaktion exotherm verläuft, kann es zweckmäßig sein, das Reaktionsgemisch zu kühlen, um eine niedrige Umsetzungstemperatur zu gewährleisten.

Das beim Verfahren der Erfindung eingesetzte Ausgangsprodukt der allgemeinen Formel (II) stellt ein leicht zugängliches, technisches Produkt dar.

Im einzelnen ist zu dem Verfahren der Erfindung folgendes zu bemerken :

Zur Durchführung des Verfahrens tropft man nacheinander wasserfeie Schwefelsäure, die aus 98 %iger Schwefelsäure und Oleum hergestellt werden kann, und die Verbindung der allgemeinen Formel (II) unter Rühren und eventueller Kühlung in das vorgelegte Lösungsmittel ein. Die Reaktion setzt beim Zutropfen von (II) sofort exotherm unter Abspaltung von stöchiometrischen Mengen an $SO_2$ und HCl ein, die den Reaktionsraum weitgehend verlassen und durch nachgeschaltete Wasser- bzw. Natronlaugewäschen neutralisiert werden können. Die Reihenfolge der Eduktzugabe kann auch in umgekehrter Reihenfolge erfolgen. Das Verfahrensprodukt (I) ist als einzige der an der Reaktion beteiligten Verbindungen in dem verwendeten Verdünnungsmittel schwer löslich, setzt sich somit als untere Phase ab und kann so leicht abgetrennt werden. Durch Strippen im Vakuum lassen sich Reste an Lösungsmittel und Reaktionsgasen, die dem Verfahrensprodukt eventuell anhaften, weitgehend entfernen.

Die Phosphorsäureanhydride lassen sich in quantitativer Ausbeute isolieren.

Das Verfahren der Erfindung stellt im Gegensatz zu den bekannten Verfahren ein einfaches, energetisch günstiges Verfahren dar, indem technisch interessante und leicht zugängliche Ausgangsprodukte eingesetzt werden. Ein weiterer Vorteil des Verfahrens besteht darin, daß die Reaktion spontan einsetzt und dabei nur gasförmige Nebenprodukte entstehen, die sich leicht abtrennen lassen. Ferner ist es günstig, daß das gewünschte Endprodukt im Verdünnungsmittel schwer löslich ist und dadurch leicht abgetrennt und isoliert werden kann.

Die erfindungsgemäß erhaltenen Phosphonsäureanhydride stellen wertvolle Zwischenprodukte für die Herstellung von Präparationsmitteln für textile Fasern, Flammschutzmitteln oder Kondensationsmitteln für die Peptid- oder Amidsynthese dar.

Das Verfahren der Erfindung wird durch die folgenden Beispiele näher erläutert.

## Beispiel 1

In einem 250 ml Mehrhalskolben, versehen mit Rührer, Thermometer, Rückflußküler, Tropftrichter und Gaseinleitungsrohr wurden 150 ml getrockneter Diethylether vorgelegt und unter Stickstoff-Atmosphäre 35,5 g (0,36 mol) etwa 100 %ige Schwefelsäure unter Eiswasserkühlung innerhalb von 30 min eingetropft. Es wurde eine farblose, klare Lösung erhalten, zu der innerhalb von einer Stunde 44,2 g (0,38 mol) Dichlormethylphosphan zugetropft wurden. Die Reaktionstemperatur wurde durch das Sieden des Ethers begrenzt. Hydrogenchlorid und Schwefeldioxid verließen den Reaktionsraum und wurden in nachgeschalteten Wasser- bzw. Natronlaugewäschen aus dem Inertgasstrom ausgewaschen. Das gebildete Produkt setzte sich als untere Phase ab und wurde nach dem Abdekantieren des Lösungs- bzw. Verdünnungsmittels im Hochvakuum von anhaftendem Ether und Reaktionsgasen befreit. Es wurden

29,7 g eines weißen Feststoffes erhalten. Aus spektroskopischen Daten und dem bei der Methanolyse des Produktes gefundenen Verhältnis von Methanphosphonsäure zu Methanphosphonsäuremonomethylester von 1 : 4 ergibt sich für das Verfahrensprodukt eine mittlere Kettenlänge n gleich 5. Die Ausbeute betrug 0,07 mol

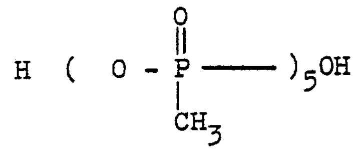

entsprechend 100 % der Theorie.

Beispiel 2

In der Apparatur analog Beispiel 1 wurden 110 g (1,1 mol) 100 %ige Schwefelsäure in 450 ml getrocknetem Diethylether unter Eiswasserkühlung gelöst. Die Etherlösung wurde zum Sieden erhitzt und 161 g (1,2 mol) Dichlorethylphosphan zugetropft, wobei Hydrogenchlorid und Schwefeldioxyd den Reaktionsraum verließen. Anschließend wurden das Lösungsmittel sowie Reste der gasförmigen Reaktionsprodukte im Vakuum bei 50-60 °C Badtemperatur abgetrieben. Es blieben 104,4 g Rückstand. Aus spektroskopischen Daten und dem bei der Methanolyse des Produkts gefundenen Verhältnis von Ethanphosphonsäure zu Ethanphosphonsäuremonomethylester von 1 : 15 ergibt sich für das Verfahrensprodukt eine mittlere Kettenlänge n gleich 16. Die Ausbeute betrug 0,07 mol

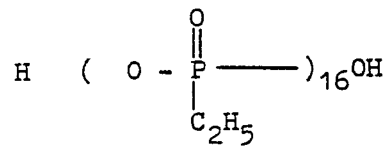

entsprechend 100 % der Theorie.

Beispiel 3

In der Apparatur analog Beispiel 1 wurden 27 g (0,27 mol) ca. 100 %ige Schwefelsäure in 80 ml feuchten Dibutylether unter Wasserkühlung so zugetropft, daß als Gemischtemperatur 25 °C nicht überschritten wurden. 49,5 g (0,25 mol) Dichlorphenylphosphan wurden in die Lösung in dem Maße eingetropft, daß eine Reaktionstemperatur von 80 °C nicht überschritten wurde. Entstehendes Hydrogenchlorid und Schwefeldioxyd wurden in nachgeschalteten Wäschen aus dem entweichenden Inertgasstrom ausgewaschen. Das Reaktionsgemisch bildete zwei Phasen. von denen die obere Etherphase abgetrennt wurde. Der Rückstand wurde im Vakuum von Lösungsmittelresten und gelösten gasförmigen Reaktionsprodukten befreit. Es wurde Phenylphosphonsäureanhydrid als viskoses, leicht gelbes Öl in quantitativer Ausbeute erhalten. Die mittlere Kettenlänge n des Anhydrids betrug 2,5 g.

Beispiel 4

In der Apparatur analog Beispiel 1 wurde eine Lösung von 50,4 g (0,51 mol) ca. 100 %ige $H_2SO_4$ in 200 ml getrocknetem Diethylether vorgelegt und in die Lösung 92 g (0,51 mol) Dichlorphenylphosphan in dem Maße zugetropft, daß das Lösungsmittel unter Rückfluß siedete. Entweichendes $SO_2$ und HCl wurden in nachgeschalteten Wäschen aus dem Inertgasstrom entfernt. Das Produkt wurde im Vakuum vom Lösungsmittel und gelösten, gasförmigen Reaktionsprodukten befreit und als leicht gelbes, viskoses Öl isoliert. Die mittlere Kettenlänge n des Phenylphosphonsäureanhydrids betrug 7 und die Ausbeute 78 g (0,078 mol) oder 100 % der Theorie.

**Patentansprüche**

1. Verfahren zur Herstellung von Phosphonsäureanhydriden der allgemeinen Formel (I)

$$(RPO_2)_n \cdot H_2O \qquad (I)$$

in welcher R einen Alkyl- oder Arylrest mit 1-6 C-Atomen bedeutet und n ein Wert zwischen 2 und 20 ist, dadurch gekennzeichnet, daß man eine Verbindung der allgemeinen Formel (II)

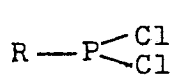

(II)

wobei R obige Bedeutung besitzt, mit konzentrierter Schwefelsäure in einer Inertgasatmosphäre und in Gegenwart eines Verdünnungsmittels bei einer Temperatur zwischen Null und 100 °C unter Entweichen von Chlorwasserstoff und Schwefeldioxid oxidiert, wobei das Molverhältnis zwischen der Verbindung der allgemeinen Formel (II) und der Schwefelsäure etwa 1 zu 1 beträgt, und daß man nach beendeter Reaktion das Verdünnungsmittel von dem entstandenen Verfahrensprodukt entsprechend der allgemeinen Formel (I) abtrennt.

2. Verfahren nach Anspruch 1, dadurch gekennzeichnet, daß das Molverhältnis zwischen der Verbindung der allgemeinen Formel (II) und der Schwefelsäure 1 bis 1,2 zu 1 beträgt.

3. Verfahren nach Anspruch 1 oder 2, dadurch gekennzeichnet, daß das Verdünnungsmittel ein Ether mit einem Siedepunkt von etwa 30 bis 140 °C ist.

4. Verfahren nach Anspruch 3, dadurch gekennzeichnet, daß das Verdünnungsmittel Diethylether, Diisopropylether, Dibutylether oder Dioxan ist.

5. Verfahren nach Anspruch 1 bis 4, dadurch gekennzeichnet, daß man die Kettenlänge der Verbindung der allgemeinen Formel (I) durch Zugabe geringer Mengen Wasser in den Reaktionsansatz steuert.

**Claims**

1. Process for making phosphonic anhydrides of the general formula (I)

$$(RPO_2)_n \cdot H_2O \qquad (I)$$

in which R stands for an alkyl or aryl group having from 1 to 6 carbon atoms and n stands for a value between 2 and 20, which comprises oxidizing a compound of the general formula (II)

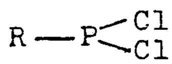
(II)

in which R has the meaning given above, with concentrated sulfuric acid under inert gas and in the presence of a diluent at a temperature between 0 and 100 °C with escape of hydrogen chloride and sulfur dioxide, the compound of formula (II) and sulfuric acid being used in a molar ratio of about 1 : 1, terminating the reaction and separating the diluent from the product of formula (I).

2. Process as claimed in claim 1, wherein the molar ratio compound of general formula (II)/sulfuric acid is 1-1.2 : 1.

3. Process as claimed in claim 1 or 2, wherein the diluent is an ether having a boiling point of about 30 to 140 °C.

4. Process as claimed in claim 3, wherein the diluent is diethylether, diisopropylether, dibutylether or dioxane.

5. Process as claimed in any of claims 1 to 4, wherein the chain length of the compound of general formula (I) is regulated by the introduction of minor proportions of water into the reaction batch.

**Revendications**

1. Procédé de préparation d'anhydrides phosphoniques de formule générale (I)

$$(RPO_2)_n \cdot H_2O \qquad (I)$$

dans laquelle R représente un groupe alkyle ou aryle en $C_1$-$C_6$ et n est une valeur entre 2 et 20, caractérisé en ce que l'on oxyde un composé de formule générale (II)

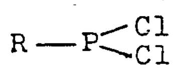
(II)

dans laquelle R a la signification déjà donnée, par l'acide sulfurique concentré en atmosphère de gaz inerte et en présence d'un diluant à une température comprise entre zéro et 100 °C avec dégagement de gaz chlorhydrique et d'anhydride sulfureux, le rapport molaire composé de formule générale (II)/acide sulfurique étant d'environ 1 : 1, et en ce qu'à la fin de la réaction on sépare le diluant du produit final formé de formule générale (I).

2. Procédé selon la revendication 1, caractérisé en ce que le rapport molaire composé de formule générale (II)/acide sulfurique est de 1-1,2 : 1.

3. Procédé selon la revendication 1 ou 2, caractérisé en ce que le diluant est un éther d'un point d'ébullition d'environ 30-140 °C.

4. Procédé selon la revendication 3, caractérisé en ce que le diluant est l'éther diéthylique, l'éther diisopropylique, l'éther dibutylique ou le dioxanne.

5. Procédé selon l'une des revendications 1 à 4, caractérisé en ce que l'on règle la longueur de chaîne du composé de formule générale (I) par addition de faibles quantités d'eau à la charge réactionnelle.